# EUROPÄISCHE PATENTANMELDUNG

(11) **EP 0 570 066 A1**
(43) Veröffentlichungstag der Anmeldung: **18.11.1993**
(21) Anmeldenummer: 93201329.5
(22) Anmeldetag: 07.05.1993
(51) Int. Cl.: G01L 3/10

(54) **Dehnungstransformator zur Drehmomentmessung einer zylindrischen Welle**

(30) Priorität: 09.05.1992 DE 4215306
(71) Anmelder: Philips Patentverwaltung GmbH, 22335 Hamburg (DE); Philips Electronics N.V., 5621 BA Eindhoven (NL)
(72) Erfinder: Kindler, Ulrich, Dr.-Ing., W-2000 Hamburg 1 (DE)
(74) Vertreter: Erdmann, Anton, Dipl.-Ing.

(57) **Zusammenfassung**

Die Erfindung betrifft einen Dehnungstransformator (11) zur Drehmomentmessung einer zylindrischen Welle (10), bestehend aus einem mit der Welle (10) rotierenden Meßwertaufnehmer (12) und mindestens einem Meßfühler (16) zur Umwandlung einer drehmomentabhängigen Verformung der Welle (10) in ein auswert- und anzeigbares Signal, wobei der Meßwertaufnehmer (12) axial ausgerichtet auf der Mantelfläche (13) der Welle (10) angeordnet ist und in axialer Richtung Randabschnitte (14, 19) aufweist, welche die Verformung der Welle (10) übertragend auf deren Mantelfläche (13) befestigt sind, und daß der Meßwertaufnehmer (12) zwischen diesen Randabschnitten (14, 19) mindestens einen Abschnitt (15) mit verringertem Querschnitt aufweist, der einen Meßfühler (16) für die Verformung trägt.

## Beschreibung

Die Erfindung betrifft einen Dehnungstransformator zur Drehmomentmessung einer zylindrischen Welle, bestehend aus einem mit der Welle rotierenden Meßwertaufnehmer und mindestens einem Meßfühler zur Umwandlung einer drehmomentabhängigen Verformung der Welle in ein auswert- und anzeigbares Signal.

Dehnungstransformatoren sind an sich bekannt. So z.B. aus dem Aufsatz "Mikrorechnergestützte Werkzeugüberwachung auf der Basis von Dehungsmessungen an Drehmaschinen", Stange, B, Feingerätetechnik 36, 1987, Band 10, Seite 463 bis 465. Derartige Dehnungstransformatoren besitzen einen Abschnitt mit geschwächtem Querschnitt, an dem beispielsweise Dehnungsmeßstreifen positioniert sind. Im Abschnitt mit geschwächtem Querschnitt tritt eine Erhöhung der Dehnung auf, verglichen mit der Dehnung in der Ebene. Es können also nur Dehnungen in der Ebene oder die Biegung eines Balkens gemessen werden. Entsprechende für die Biegung eines Balkens geeignete Dehnungstransformatoren sind deshalb zur Drehmomentmessung, also der Messung der Verformung einer Welle durch Torsion, nicht geeignet.

Zur Drehmomentmessung einer zylindrischen Welle ist beispielsweise aus der Firmenbroschüre "Drehmoment-Messung" der Firma Dr. Steiger, Mohilo + Co GmbH, Baumwasenstr. 5, D-7060 Schorndorf auf Seite 11 ein Dehnungstransformator unter der Bezeichnung DMS-Aufnehmer FN bekannt. Dieser Dehnungstransformator arbeitet mit frequenzmodulierter Signalübertragung. In einem Gehäuse befindet sich eine gelagerte Welle. Diese Welle weist eine verjüngte Stelle als Torsionsstrecke auf, an der Dehnungsmeßstreifen in Vollbrückenschaltung angeordnet sind. Die Vollbrücke setzt ein zwischen beiden Wellen anliegendes Drehmoment in ein proportionales elektrisches Signal um. Auf der Antriebsseite der Welle sind zwei transformatorische Übertragungsspulen angeordnet. Die größere Spule dient zur Speisung der Elektronik in der rotierenden Welle, die kleinere überträgt das Meßsignal von der Welle auf das Gehäuse. Die Auswerteelektronik ist in einem Anschlußkasten des Stators untergebracht.

Insbesondere bei der Drehmomentmessung von Antriebsspindeln, z.B. einer Werkzeugmaschine, wurden bislang entsprechende Vorrichtungen zur Drehmomentmessung eingesetzt. Diese sind einerseits wenig empfindlich und benötigen andererseits immer eine Schwächung der auf Torsion zu untersuchenden Welle. Ferner sind sie wegen der erforderlichen Schwächung der zu messenden Welle in der Regel auch nicht nachrüstbar.

Der vorliegenden Erfindung liegt die Aufgabe zugrunde, einen Dehnungstransformator zur Drehmomentmessung einer zylindrischen Welle zu schaffen, der auch bei einer berührungslosen Meßwertübertragung ohne Schwächung der zu messenden Welle eine hohe Meßempfindlichkeit bei gleichzeitiger Nachrüstbarkeit aufweist.

Erfindungsgemäß wird diese Aufgabe dadurch gelöst, daß der Meßwertaufnehmer axial ausgerichtet auf der Mantelfläche der Welle angeordnet ist und in axialer Richtung Randabschnitte aufweist, welche die Verformung der Welle übertragend auf deren Mantelfläche befestigt sind, und daß der Meßwertaufnehmer zwischen diesen Randabschnitten mindestens einen Abschnitt mit verringertem Querschnitt aufweist, der einen Meßfühler für die Verformung trägt.

Entsprechend einer bevorzugten Ausgestaltung der Erfindung kann vorgesehen sein, daß der erfindungsgemäße Meßwertaufnehmer eine die Welle umschließende zylindrische Form aufweist, mit an den Randabschnitten zur Befestigung auf der Welle an diese angepaßten kleineren Durchmessern und im mittleren Abschnitt zwischen diesen Randbereichen größerem Durchmesser, der einen Kraftnebenschluß in diesem mittleren Abschnitt sicher verhindert. In vorteilhafter Weise wird bei einem erfindungsgemäß ausgebildeten Meßwertaufnehmer die drehmomentabhängige Verformung der Welle über die Randabschnitte des Meßwertaufnehmers auf den Meßfühler übertragen. Der Abschnitt mit verringertem Querschnitt, auf dem der Meßfühler angeordnet ist, unterliegt dann hauptsächlich einer Scherspannung, die bereits durch die Querschnittsverminderung vergrößert wird und zu einer Erhöhung der Meßempfindlichkeit führt.

Gemäß einer bevorzugten Ausgestaltung kann vorgesehen sein, daß auf der im mittleren Abschnitt zu Stegen reduzierten Mantelfläche des Meßwertaufnehmers vorzugsweise mittig auf den gleichmäßig auf den Umfang des Meßwertaufnehmers verteilten Stegen auf Abschnitten mit verringertem Querschnitt parallel zur Mantelfläche der Welle Meßfühler angeordnet sind, wobei die Stege die beiden Randabschnitte verbinden.

Ferner kann vorgesehen sein, daß vier Stege um 90° in Umfangsrichtung versetzt zwischen den Randabschnitten des Meßwertaufnehmers angeordnet sind.

Die Reduzierung der Mantelfläche des Meßwertaufnehmers im mittleren Abschnitt zu Stegen hat auch zur Folge, daß die Meßempfindlichkeit weiter gesteigert werden kann. Die Anordnung der Meßfühler auf den Abschnitten mit verringertem Querschnitt erfolgt dabei an sich auf einer Fläche parallel zur Mantelfläche der zu messenden Welle. Es ist jedoch auch denkbar, daß die Meßfühler in anderer Weise auf den Abschnitten mit verringertem Querschnitt hinsichtlich der Mantelfläche der zu messenden Welle ausgerichtet werden, so daß beispielsweise die Biegungen der Stege ermittelt werden.

Gemäß einer besonderen Ausgestaltung der Erfindung kann vorgesehen sein, daß die Randabschnitte auf der Mantelfläche der Welle kraftschlüssig, mit Ringspannelementen oder durch Verklebung in Umfangsrichtung wie eingespannte Balken befestigt sind. Durch diese Befestigungsform wird besonders deutlich, daß erfindungsgemäß keinerlei Beschädigungen oder Schwächungen der zu messenden Welle erforderlich sind und dadurch auch ein einfaches Nachrüsten gewährleistet ist. Sofern der Meßwertaufnehmer zylindrische Form aufweist, ist vorteilhaft eine kraftschlüssige Befestigung, z.B. durch Anpassung der Durchmesser vorzusehen. Durch Verwendung von Ringspannelementen kann auch ein unvermeidbares Spiel zwischen dem zylindrischen Meßwertaufnehmer und der zu messenden Welle ausgeglichen werden. Vorteilhaft kann, wie bereits ausgeführt, der zylindrische, wie auch der nur stegförmige Meßwertaufnehmer auf die zu messende Welle aufgeklebt sein. Allen Befestigungsmöglichkeiten ist gemeinsam, daß durch die Befestigung der entsprechende Randabschnitt in Umfangsrichtung quasi wie ein eingespannter Balken auf dem entsprechenden Abschnitt der Mantelfläche der Welle gehalten wird, so daß auf den Abschnitt mit verringertem Querschnitt im wesentlichen nur in Umfangsrichtung der Welle weisende Scherspannungen übertragen werden.

Obgleich grundsätzlich die Abschnitte mit verringertem Querschnitt mit den Meßfühlern etwa mittig auf den Stegen angeordnet sind, kann vorgesehen sein, daß in axialer Richtung mehrere Abschnitte mit verringertem Querschnitt und entsprechenden Meßfühler vorgesehen sind, wodurch auch der örtliche Torsionsverlauf darstellbar ist.

Gemäß einer bevorzugten Ausgestaltung der Erfindung kann ferner vorgesehen sein, daß eine bestimmte Empfindlichkeit des Meßwertaufnehmers durch Wahl des Abstandes der Abschnitte mit verringertem Querschnitt von der Symmetrieachse der Welle definiert ist. Durch diese einfache Maßnahme ist die Empfindlichkeit des Meßwertaufnehmers quasi beliebig einstellbar und robust gegenüber eventuell störenden Biegemomenten. Dies kann durch die Dimensionierung der Querschnitte selbst noch unterstützt werden.

Gemäß einer bevorzugten Ausgestaltung der Erfindung kann vorgesehen sein, daß die Meßfühler aus je einer Meßbrückenschaltung aufgebaut und als Dehnungsmeßstreifen, bzw. durch Dünnfilmtechnik auf die Oberfläche des Meßwertaufnehmers im Bereich der Abschnitte mit verringertem Querschnitt aufgeklebt bzw. aufgebracht sind.

Beim erfindungsgemäßen Dehnungstransformator kann ein auswert- und anzeigbares Signal auf einfache Weise dadurch erzeugt werden, daß die den Meßfühlern zur Erzeugung dieses Signals über eine berührungslose Energieversorgung und einen Oszillator zugeführte Taktfrequenz bei Verformung und somit Verstimmung der Meßbrückenschaltung über einen Modulator entsprechend moduliert wird und über eine Sendespule, eine Empfangsspule, einen Demodulator und einen Verstärker zur Anzeige gebracht wird.

Der erfindungsgemäße Dehnungsmeßtransformator ist deshalb, also wegen seiner hohen Empfindlichkeit, seiner Nachrüstbarkeit, da keine Schwächung der zu messenden Welle erforderlich ist und auch wegen der berührungslosen Meßwertübertragung besonders gut zur Messung einer Welle geeignet, die eine Antriebsspindel für eine Werkzeugmaschine darstellt.

Experientielle Untersuchungen haben ferner gezeigt, daß gegenüber einer indirekten Drehmomentmessung, z.B. Strommessung oder der Messung der kleinen Vorschubkräfte beim Gewindebohren oder der Erfassung der ebenfalls kleinen Körperschallsignale beim Gewindebohren, die erfindungsgemäße direkte Drehmomentmessung wesentlich schneller zum Erkennen z.B. eines Bruches führt, was besonders bei der Prozeßanalyse des Bohrens und insbesondere des Gewindebohrens von besonderer Wichtigkeit ist. Die mit der erfindungsgemäßen direkten Drehmomentmessung ermittelbare Kennlinie Ausgangssignal/Drehmoment ist linear. Bei den Messungen ist lediglich mit einer drehzahlproportionalen Störschwingung zu rechnen, die jedoch durch Filterung leicht unterdrückt werden kann und im wesentlichen auf die je Umdrehung nicht konstante Reibung der die Welle tragenden Lager zurückzuführen ist, also keine Ursache im erfindungsgemäßen Dehnungstransformator hat.

Weitere vorteilhafte Ausgestaltungen der Erfindung ergeben sich aus den Unteransprüchen.

Ein Ausführungsbeispiel wird nachfolgend unter Bezugnahme auf eine Zeichnung näher erläutert. Darin zeigt:
- Fig. 1: einen erfindungsgemäßen auf einer Welle montierten Dehnungstransformator, bestehend aus einem Meßwertaufnehmer mit Meßfühlern, und
- Fig. 2: Meßfühler, Auswerte- und Anzeigeelemente.

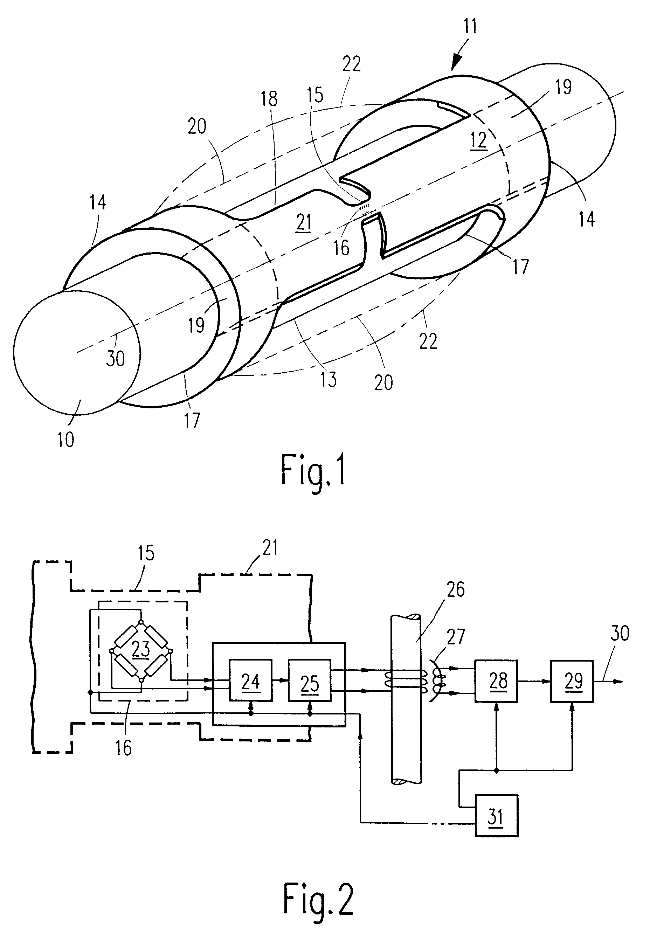

Fig. 1 zeigt eine zylindrische Welle 10, auf der ein erfindungsgemäßer Dehnungstransformator 11, bestehend aus einem mit der Welle rotierenden Meßwertaufnehmer 12 angeordnet ist. Der Meßwertaufnehmer 12 ist axial auf der Mantelfläche 13 der Welle 10 angeordnet und weist in axialer Richtung Randabschnitte 14, 19 auf, welche die Verformung der Welle 10 auf den Meßwertaufnehmer 14 übertragen und dazu auf der Mantelfläche 13 der Welle 10 befestigt sind. Zwischen den Randabschnitten 14, 19 weist der Meßwertaufnehmer 12 mindestens einen Abschnitt 15 mit verringertem Querschnitt auf, der einen Meßfühler 16 für die Verformung trägt. Der in Fig. 1 dargestellte Meßwertaufnehmer 12 kann eine die Welle 10 umschließende zylindrische Form aufweisen. Die Randabschnitte 14 haben zur Befestigung auf der Welle 13 an diese angepaßte kleinere Durchmesser 17. Im mittleren Abschnitt 18 zwischen den Randbereichen 14 ist ein größerer nicht besonders gekennzeichneter Durchmesser vorgesehen, der u.a. einen Kraftnebenschluß in diesem mittleren Abschnitt 18 sicher verhindert.

Eine besonders einfache Ausgestaltung des Meßwertaufnehmers 12 kann dadurch verwirklicht werden, daß der in Fig. 1 dargestellte mittlere Abschnitt 18 über die Randabschnitte 14 hinaus sozusagen verlängert wird und auf eine zylindrische Form des Meßwertaufnehmers 12 verzichtet wird. Bei entsprechender Befestigung der verbleibenden gestrichelt angedeuteten Randabschnitte 19 des dann stabförmigen Meßwertaufnehmers 12 auf der Mantelfläche 13 der Welle 10 kann erreicht werden, daß auf den Abschnitt 15 mit verringertem Querschnitt im wesentlichen nur in Umfangsrichtung der Welle weisende Scherspannungen übertragen werden. Vorteilhaft werden die Randabschnitte 19 dann mit der Mantelfläche 13 der Welle 10 verklebt, so daß in Umfangrichtung betrachtet, der mittlere Abschnitt 18 des Meßwertaufnehmers 12 beidseitig quasi wie ein eingespannter Balken befestigt ist.

Auch bei zylindrischer Formgebung des Meßwertaufnehmers 12 können die Randabschnitte 14 mit der Mantelfläche 13 der Welle 10 verklebt sein. Durch Verwendung von nicht dargestellten Ringspannelementen kann eine Befestigungsform gewählt werden, die ein an sich unvermeidbares Spiel zwischen dem zylindrischen Meßwertaufnehmer 12 und der zu messenden Welle 10 ausgleicht. Allen Befestigungsmöglichkeiten ist gemeinsam, daß durch die Befestigung der entsprechend der Randabschnitt 14, 19 und somit der Abschnitt 18 in Umfangrichtung quasi wie ein eingespannter Balken auf der entsprechenden Mantelfläche 13 der Welle 10 gehalten wird, so daß auf den Abschnitt 15 mit verringertem Querschnitt im wesentlichen nur in Umfangrichtung der Welle 10 weisende Scherspannungen übertragen werden.

In Fig. 1 wird deutlich, daß die gestrichelt angedeutete Mantelfläche 20 des zylindrischen Meßwertaufnehmers 12 im mittleren Abschnitt 18 zu Stegen 21 reduziert sein kann. In Fig. 1 ist ein Steg 21 sichtbar. Ein weiterer Steg befindet sich auf der gegenüberliegenden Seite der Welle 10. Vorteilhaft können beliebig viele Stege 21 vorgesehen sein, die dann gleichmäßig auf den Umfang der Mantelfläche 20 des Meßwertaufnehmers 12 verteilt sind. Durch Verwendung mehrerer Stege 21 kann die Empfindlichkeit auch gegenüber dem Drehmoment eventuell überlagerten, störenden Biegemomenten wesentlich verringert werden. Etwa mittig auf den Stegen 21 ist jeweils der Abschnitt 15 mit verringertem Querschnitt angeordnet, auf dem planparallel zur Mantelfläche 13 der Welle 10 Meßfühler 16 angeordnet sind.

Der in Fig. 1 dargestellte Meßwertaufnehmer 12 weist also zwei Stege 21 um 180° in Umfangrichtung versetzt zwischen den Randabschnitten 14 des Meßwertaufnehmers 12 auf. Es kann auch vorgesehen sein, daß vier Stege 21 um 90° in Umfangrichtung versetzt zwischen den Randabschnitten 14 des Meßwertaufnehmers 12 angeordnet sind.

Wie bereits ausgeführt, sind die Randabschnitte 14, 19 auf der Mantelfläche 13 der Welle 10 kraftschlüssig, mit Ringspannelementen oder durch Verklebung in Umfangsrichtung wie eingespannte Balken befestigt.

Obgleich dies nicht dargestellt ist, können die Stege 21 auch in axialer Richtung mehrere Abschnitte 15 mit verringertem Querschnitt und Meßfühler 16 aufweisen, wodurch im gewissen Maße die Torsion auch örtlich zugeordnet werden kann. Besonders vorteilhaft ist bei einem erfindungsgemäßen Dehnungstransformator 11 eine bestimmte Empfindlichkeit des Meßwertaufnehmers 12 definiert durch die Wahl des Abstandes der Abschnitte 15 mit verringertem Querschnitt von der Symmetrieachse 30 der Welle 10. Die Stege 21 des Meßwertaufnehmers 12 müßten hierzu entsprechend der strichpunktierten Linie 22 gewölbt ausgebildet sein.

Die Meßfühler 16 sind aus einer Meßbrückenschaltung 23 aufgebaut und als Dehnungsmeßstreifen, bzw. durch Dünnfilmtechnik auf die Oberfläche des Meßwertaufnehmers 12 im Bereich der Abschnitte 15 mit verringertem Querschnitt aufgeklebt bzw. aufgebracht (- gesputtert).

Fig. 2 zeigt einen Abschnitt eines Steges 21 mit einem Abschnitt 15 mit verringertem Querschnitt, auf dem ein Meßfühler 16, angedeutet durch eine Meßbrückenschaltung 23, angeordnet ist. Zur Erzeugung eines auswert- und anzeigbaren Signals kann eine berührungslose Energieversorgung (punktierte Linie) vorgesehen sein, die aus einer Energiequelle 31 gespeist wird und den Meßfühler 23, einen Oszillator 24 und einen Modulator 25 versorgt. Der Oszillator, der die Verstimmung der Meßbrückenschaltung 23 eingangsseitig erhält und der ihm nachgeordnete Modulator 25 sind auf dem mit der Welle 10 rotierenden Meßwertaufnehmer 12 angeordnet, ebenso wie eine Signalübertragungsspule 26, die dem Modulator 25 nachgeordnet ist. Es kann vorgesehen sein, daß die Energieversorgung auch auf dem rotierenden Meßwertaufnehmer 12 durch eine ebenfalls auf diesem angeordnete Batterie durchgeführt wird. Entsprechend der Verformung und somit der Verstimmung der Meßbrückenschaltung 23 wird die Taktfrequenz des Oszillators 24 verstimmt bzw. über den Modulator 25 entsprechend moduliert und über die Signalübertragungsspule 26 an eine Signalempfangsspule 27 übertragen, der ein Demodulator 28 und ein Verstärker 29 nachgeordnet sind. Am Ausgang 30 des Demodulators 29 steht dann ein drehmomentabhängiges aufbereitetes Signal zur Verfügung. Der Demodulator 28 und der Verstärker 29 können ebenfalls aus der Energiequelle 31 mit Energie versorgt werden.

Der erfindungsgemäße Dehnungstransformator 11 ist somit wegen seiner hohen Empfindlichkeit, seiner Nachrüstbarkeit und auch wegen der berührungslosen Meßwertübertragung besonders gut zur direkten Messung der Torsion einer Welle geeignet, die eine Antriebsspindel für eine Werkzeugmaschine darstellt.

Die in der vorstehenden Beschreibung, in den Fig. sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Dehnungstransformator zur Drehmomentmessung einer zylindrischen Welle, bestehend aus einem mit der Welle rotierenden Meßwertaufnehmer und mindestens einem Meßfühler zur Umwandlung einer drehmomentabhängigen Verformung der Welle in ein auswert- und anzeigbares Signal,
dadurch gekennzeichnet, daß der Meßwertaufnehmer (12) axial ausgerichtet auf der Mantelfläche (13) der Welle (10) angeordnet ist und in axialer Richtung Randabschnitte (14, 19) aufweist, welche die Verformung der Welle (10) übertragend auf deren Mantelfläche (13) befestigt sind, und daß der Meßwertaufnehmer (12) zwischen diesen Randabschnitten (14, 19) mindestens einen Abschnitt (15) mit verringertem Querschnitt aufweist, der einen Meßfühler (16) für die Verformung trägt.

2. Dehnungstransformator nach Anspruch 1,
dadurch gekennzeichnet, daß der Meßwertaufnehmer (12) eine die Welle (10) umschließende zylindrische Form aufweist, mit an den Randabschnitten (14) zur Befestigung auf der Welle (13) an diese angepaßten kleineren Durchmessern (17) und im mittleren Abschnitt (18) zwischen diesen Randbereichen (14) größerem Durchmesser, der einen Kraftnebenschluß in diesem mittleren Abschnitt (18) sicher verhindert.

3. Dehnungstransformator nach Anspruch 2,
dadurch gekennzeichnet, daß auf der im mittleren Abschnitt (18) zu Stegen (21) reduzierten Mantelfläche (20) des Meßwertaufnehmers (12) mittig auf den gleichmäßig auf den Umfang des Meßwertaufnehmers (12) verteilten Stegen auf Abschnitten (15) mit verringertem Querschnitt parallel zur Mantelfläche (13) der Welle (10) Meßfühler (16) angeordnet sind, wobei die Stege (21) die beiden Randabschnitte (14) verbinden.

4. Dehnungstransformator nach Anspruch 3,
dadurch gekennzeichnet, daß vier Stege (21) um 90° in Umfangsrichtung versetzt zwischen den Randabschnitten (14) des Meßwertaufnehmers (12) angeordnet sind.

5. Dehnungstransformator nach Anspruch 4,
dadurch gekennzeichnet, daß die Randabschnitte (14, 19) auf der Mantelfläche (13) der Welle (10) kraftschlüssig, mit Ringspannelementen oder durch Verklebung in Umfangsrichtung wie eingespannte Balken befestigt sind.

6. Dehnungstransformator nach Anspruch 5, dadurch gekennzeichnet, daß die Stege (21) in axialer
Richtung mehrere Abschnitte (15) mit verringertem Querschnitt und Meßfühlern (16) aufweisen.

7. Dehnungstransformator nach Anspruch 6,
dadurch gekennzeichnet, daß eine bestimmte Empfindlichkeit des Meßwertaufnehmers (12) durch Wahl des Abstandes der Abschnitte (15) mit verringertem Querschnitt von der Symmetrieachse (30) der Welle (10) und der Dimensionierung der verminderten Querschnitte definiert ist.

8. Dehnungstransformator nach Anspruch 7,
dadurch gekennzeichnet, daß die Meßfühler (16) aus je einer Meßbrückenschaltung (23) aufgebaut und als Dehnungsmeßstreifen, bzw. durch Dünnfilmtechnik auf die Oberfläche des Meßwertaufnehmers (12) im Bereich der Abschnitte (15) mit verringertem Querschnitt aufgeklebt bzw. aufgebracht sind.

9. Dehnungstransformator nach Anspruch 8,
dadurch gekennzeichnet, daß die den Meßfühlern (16) zur Erzeugung eines auswert- und anzeigbaren Signals über eine berührungslose Energieversorgung und einen Oszillator (24) zugeführte Taktfrequenz bei Verformung und somit Verstimmung der Meßbrückenschaltung (23) über einen Modulator (25) entsprechend moduliert wird und über eine Sendespule (26), eine Empfangsspule (27), einen Demodulator (28) und einen Verstärker (29) zur Anzeige gebracht wird.

10. Dehnungstransformator nach einem oder mehreren der vorhergehenden Ansprüche,
dadurch gekennzeichnet, daß die Welle (10) eine Antriebsspindel für eine Werkzeugmaschine ist.
